# EUROPEAN PATENT APPLICATION

(11) **EP 2 533 337 A1**
(43) Date of publication of application: **12.12.2012**
(21) Application number: 12743874.5
(22) Date of filing: 08.03.2012
(51) Int. Cl.: H01M 8/04

(54) **FUEL CELL POWER GENERATION SYSTEM AND METHOD FOR CONTROLLING SAME**

(30) Priority: 11.04.2011 JP 2011087023
(71) Applicant: Panasonic Corporation, Osaka 571-8501 (JP)
(72) Inventor: NAKAYAMA, Atsushi, (JP); KASAI, Masumi, (JP)
(74) Representative: Grünecker, Kinkeldey, Stockmair & Schwanhäusser
(86) International application number: PCT/JP2012/001602
(87) International publication number: WO 2012/140829

(57) **Abstract**

The present invention includes a power generation section (8); an internal load (4, 6, 9, 10); an inverter (7); a voltage detector (12) and a current detector (11, 21); and a controller (6). The controller is configured to estimate a value of a current supplied to the internal load based on at least one of the current value detected by the current detector and an operation amount of the internal load, and control the inverter and the internal load based on the current value detected by the current detector and the estimated current value so that the electric power generated in the power generation section reaches the target electric power.

## Description

### Technical Field

The present invention relates to a fuel cell power generation system and a control method thereof. Particularly, the present invention relates to a fuel cell power generation system for performing feedback control of electric power generated in power generation, and a control method thereof.

### Background Art

Conventionally, there is known a fuel cell power generation system in which sensors detect an output current and an output voltage of a fuel cell main body, and power generation in the fuel cell main body is controlled based on detected values (first prior art example: e.g., see Patent Literature 1).

There is also known a fuel cell power generation system intended to further increase an energy utilization efficiency (second prior art example: e.g., see Patent Literature 2). In this fuel cell power generation system, before power generation is performed in a power generation section, an AC/DC converter converts AC power from a utility power supply into DC power, and the DC power is supplied to a controller, an actuator, etc.. When the power generation section starts the power generation, the generated DC power is supplied to the controller, the actuator, etc., via a DC/DC converter. In this way, during a state in which the fuel cell power generation system is generating electric power, operating electric power is supplied to the controller, the actuator, etc., without passing through the AC/DC converter. Thus, a conversion loss of the electric power, or the like is lessened, and the energy utilization efficiency of the fuel cell power generation system is increased.

### Citation Lists

### Patent Literature

Patent Literature 1: Japanese Laid-Open Patent Application Publication No. Hei. 8-162138
Patent Literature 2: Japanese Laid-Open Patent Application Publication No. 2008-135200

### Summary of the Invention

### Technical Problem

However, in the second prior art example, the configuration for detecting the current required to control the electric power generated in power generation is not disclosed. Thus, there is a room for improvement in increasing the energy utilization efficiency and in simplification of the configuration for detecting the current required to control the electric power generated in power generation.

The present invention has been made to solve the above stated problem, and an object of the present invention is to provide a fuel cell power generation system which can increase the energy utilization efficiency and simplify the configuration for detecting the current required to control the electric power generated in power generation.

### Solution to Problem

The present inventors paid attention to the following in the first and second prior art examples.

In general, in the control of the configurations of the first and second prior art examples, regarding the electric power generated in the fuel cell main body (power generation section in the second prior art example), the current taken out from the fuel cell main body and output to outside is adjusted by using a DC/AC converter (inverter in the second prior example), and the supply amount of a fuel (hydrogen gas in the second prior art example) and the supply amount of air (oxidizing gas in the second prior art example) are adjusted according to the current taken out. To implement this control, it is necessary to detect the value of the current taken out from the fuel cell main body. In the first prior art example, since all of the output current of the fuel cell main body is input to the DC/AC converter, the current input to the DC/AC converter may be detected. Therefore, the configuration for detecting the current required to control the electric power generated in power generation is simple.

By comparison, in the control of the configuration of the second prior art example, regarding the electric power generated in the power generation section, it is necessary to adjust the current taken out from the power generation section and output to the outside by using the inverter, and to adjust the supply amount of the hydrogen gas and the supply amount of the oxidizing gas according to the current output from the power generation section to both of the inverter and an internal load (controller, actuator, etc.) Therefore, to implement this control, it is necessary to detect the current of the inverter to adjust the current of the inverter, and to detect the current output from the power generation section to adjust the supply amount of the hydrogen gas and the supply amount of the oxidizing gas. In other words, it is necessary to detect the two currents to control the electric power generated in power generation. When the two currents are detected by using two sensors, respectively, the configuration for detecting the current required to control the electric power generated in power generation becomes complex.

A fuel cell power generation system according to an aspect of the present invention, comprises a power generation section which causes fuel gas and oxidizing gas to electrochemically react with each other to generate electric power; an internal load which consumes the electric power and causes the power generation section to perform power generation operation; an inverter which converts input DC power into AC power, outputs the AC power to outside, and adjusts the AC power output to outside; a voltage detector for detecting a voltage of the electric power generated in the power generation section; a current detector for detecting a value of a current of the electric power generated in the power generation section and supplied to both of the inverter and the internal load, or to the inverter; and a controller which decides target electric power generated in the power generation section and controls the inverter and the internal load; wherein the controller is configured to estimate the value of the current supplied to the internal load based on at least one of the current value detected by the current detector and an operation amount of the internal load, and control the inverter and the internal load based on the current value detected by the current detector and the estimated current value so that the electric power generated in the power generation section reaches the target electric power.

### Advantageous Effects of the Invention

The present invention has the above described configuration, and achieves advantages that a fuel cell power generation system capable of increasing an energy utilization efficiency and simplifying the configuration, for detecting a current required to control electric power generated in power generation, and a control method thereof.

The above and further objects, features and advantages of the invention will more fully be apparent from the following detailed description with reference to the accompanying drawings.

### Brief Description of Description

[Fig. 1] Fig. 1 is a functional block diagram showing the configuration of a fuel cell power generation system according to Embodiment 2 of the present invention.
[Fig. 2] Fig. 2 is a functional block diagram showing the configuration of a fuel cell power generation system according to Embodiment 3 of the present invention.
[Fig. 3] Fig. 3 is a functional block diagram showing the configuration of a fuel cell power generation system according to Embodiment 4 of the present invention.
[Fig. 4] Fig. 4 is a functional block diagram showing the configuration of a fuel cell power generation system according to another embodiment of the present invention.
[Fig. 5] Fig. 5 is a functional block diagram showing the configuration of a fuel cell power generation system according to Embodiment 1 of the present invention.

### Description of the Embodiments

A fuel cell power generation system according to an aspect of the present invention, comprises a power generation section which causes fuel gas and oxidizing gas to electrochemically react with each other to generate electric power; an internal load which consumes the electric power and causes the power generation section to perform power generation operation; an inverter which converts input DC power into AC power, outputs the AC power to outside, and adjusts the AC power output to outside; a voltage detector for detecting a voltage of the electric power generated in the power generation section; a current detector for detecting the value of the current of the electric power generated in the power generation section and supplied to both of the inverter and the internal load, or to the inverter; and a controller which decides target electric power generated in the power generation section and controls the inverter and the internal load; wherein the controller is configured to estimate a value of a current supplied to the internal load based on at least one of the current value detected by the current detector and an operation amount of the internal load, and control the inverter and the internal load based on the current value detected by the current detector and the estimated current value so that the electric power generated in the power generation section reaches the target electric power.

The fuel cell power generation system may further comprise an operation amount detecting section for detecting an operation amount of the fuel cell power generation system; wherein the controller may be configured to correct the estimated current value based on the operation amount detected by the operation amount detecting section.

The fuel cell power generation system may further comprise an obtaining section for obtaining installation information about installation of the fuel cell power generation system; wherein the controller may be configured to correct the estimated current value based on the installation information obtained by the obtaining section.

The internal load may include an air supply device for supplying air to the power generation section as the oxidizing gas; the installation information may include a height at which the fuel cell power generation system is installed; and the controller may be configured to correct a value of a current supplied to the air supply device based on the height of the installation information.

A method of controlling a fuel cell power generation system according to another aspect of the present invention, including: an inverter which converts input DC power into AC power, outputs the AC power to outside, and adjusts the AC power output to outside; a voltage detector for detecting a voltage of the electric power generated in the power generation section; a current detector for detecting a value of a current of the electric power generated in the power generation section and supplied to both of the inverter and the internal load, or to the inverter; and a controller which decides target electric power generated in the power generation section and controls the inverter and the internal load; wherein the controller estimates a value of a current supplied to the internal load based on at least one of the current value detected by the current detector and an operation amount of the internal load, and controls the inverter and the internal load based on the current value detected by the current detector and the estimated current value so that the electric power generated in the power generation section reaches the target electric power.

Hereinafter, embodiments of the present invention will be described with reference to the drawings.

Hereinafter, throughout the drawings, the same or corresponding components are identified by the same reference symbols and will not be described in repetition.

### (Embodiment 1)

### [Configuration]

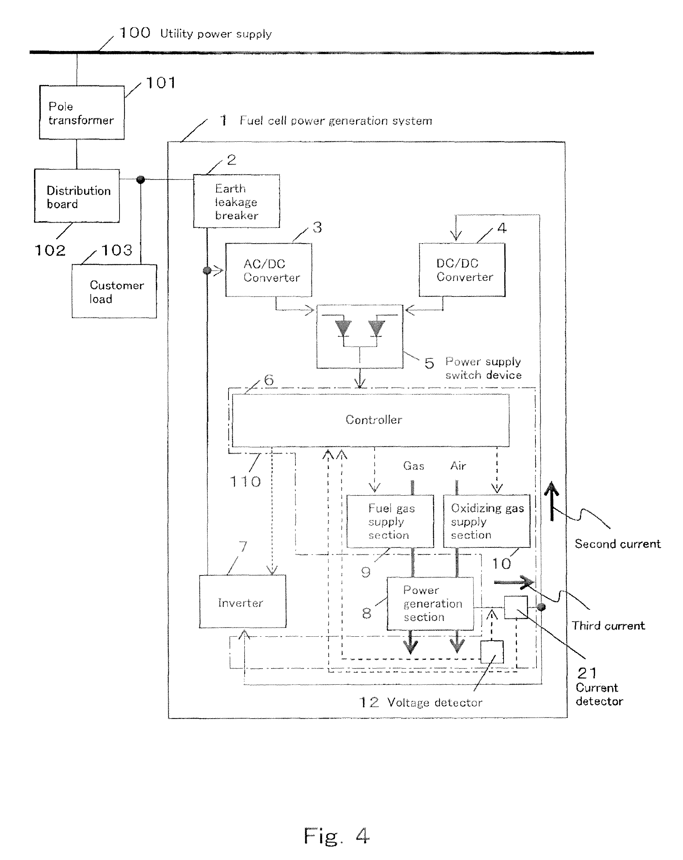

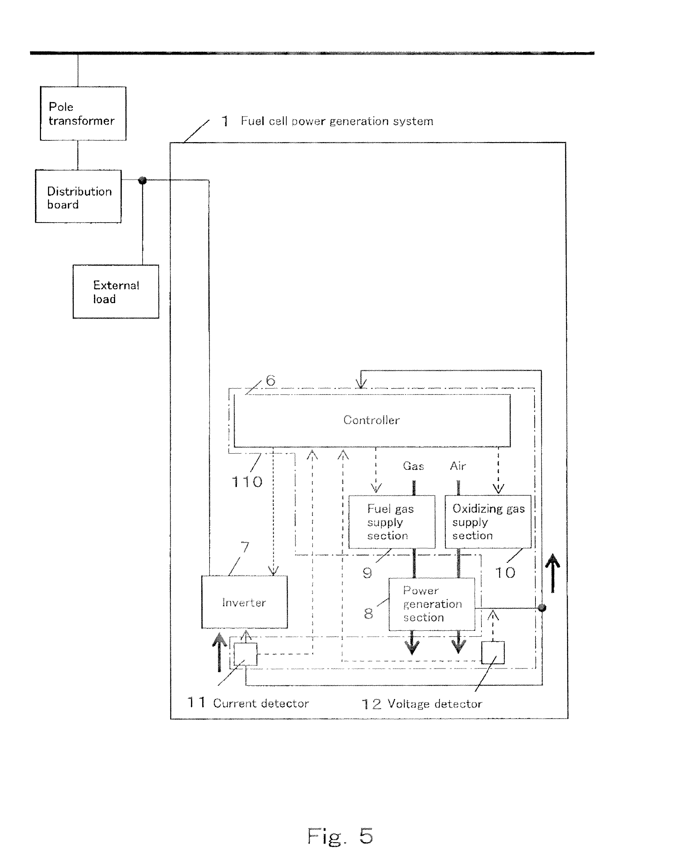

Fig. 5 is a functional block diagram showing the configuration of a fuel cell power generation system 1 according to Embodiment 1 of the present invention. In Fig. 5, a current detector 11 is illustrated, but a current detector 21 may be provided instead of the current detector 11, like the configuration of Fig. 4.

The fuel cell power generation system 1 includes a power generation section 8, an internal load 110, an inverter 7, a voltage detector 12, the current detector 11, 21, and a controller 6.

The power generation section 8 causes fuel gas and oxidizing gas to react with each other electrochemically, to generate electric power. The power generation section 8 may be constituted by any one of known fuel cells of various types. DC power generated in the power generation section 8 is output to the inverter 7 and to the internal load 110.

In a state in which the power generation section 8 is not started-up, the electric power is supplied to the internal load 110 from, for example, a utility power supply 100 as will be described in Embodiment 2, or an accumulator battery (not shown).

The inverter 7 converters the input DC power into AC power and outputs the AC power to outside. In addition, the inverter 7 adjusts the AC power output to outside.

The voltage detector 12 detects the voltage of the electric power generated in the power generation section 8.

The current detector 11 (Fig. 5), 21 (Fig. 4) detects the value of the current of the electric power generated in the power generation section 8 and supplied to both of the inverter 7 and the internal load 110, or to the inverter 7.

The controller 6 estimates the value of the current supplied to the internal load 110 based on at least one of the current value detected by the current detector 11, 21, and the operation amount of the internal load 110. The operation amount of the internal load 110 primarily means the operation amount of the actuator, and is, for example, the number of rotations of a fan which is capable of adjusting the amount of the oxidizing gas supplied from an oxidizing gas supply section 10, the opening degree of a valve which adjusts the amount of the fuel gas supplied from a fuel gas supply section 9, ON/OFF of a switch constituting a control system of the above stated amount of electric power generated in power generation, etc..

The controller 6 decides target electric power to be generated in the power generating section 8, and controls the inverter 7 and the actuator of the internal load 110 to enable the power generation section 8 to generate the target electric power. The controller 6 estimates the value of the current supplied to the internal load 110 based on at least one of the current value detected by the current detector 11, 21, and the operation amount of the internal load 110. The controller 6 controls the inverter 7 and the internal load 110 based on the current value detected by the current detector 11, 21, and the estimated current value so that the electric power generated in the power generation section 8 reaches the target electric power.

### [Operation]

### <Estimation of current value>

In the fuel cell power generation system 1 having the above stated configuration, in the state in which the power generation section 8 is generating the electric power, the DC power generated in the power generation section 8 is supplied to the internal load 110 and to an external load via the inverter 7. The voltage detector 12 detects the voltage Vn of the electric power generated in power generation. The controller 6 calculates the estimated current value of the electric power supplied to the internal load 110.

In one aspect of calculating process of the current value, the controller 6 estimates the value of the current supplied to the internal load 110 based on the operation amount (to be precise, the operation amount of each component) of the internal load 110. The consumed electric power of each component constituting the internal load 110 can be known based on characteristics (specification) and operating conditions (use conditions) of each component. Consumed electric power of each component other than the actuator is substantially constant irrespective of the amount of the electric power generated in the power generation section 8. The consumed electric power of the actuator is roughly proportional to its operation amount. Macroscopically, the operation amount of the actuator increases as the amount of the electric power generated in the power generation section 8 increases and decreases as the amount of the electric power generated in the power generation section 8 decreases. In other words, the operation amount of the actuator roughly increases/decreases monotonically, with an increase/decrease in the amount of the electric power generated in the power generation section 8. The consumed electric power of the actuator is dominant in the consumed electric power of the internal load 110. Therefore, in the case of simplified estimation, the consumed electric power of the components other than the actuator may be ignored. Therefore, it may be assumed that the consumed electric power of the internal load 110 is roughly proportional to the operation amount of the actuator and the consumed electric power of the internal load 110 roughly increases/decreases monotonically with respect to an increase/decrease in the amount of electric power generated in the power generation section 8.

By using the above stated relation between the consumed electric power of the internal load 110 and the operation amount of the internal load 110, the consumed electric power of the internal load 110 is calculated based on the operation amount of the internal load 110. The calculated consumed electric power of the internal load 110 is converted into a current value, to derive the estimated value: IAn of the current supplied to the internal load 110 (to be precise, the estimated values of the currents supplied to the components of the internal load 110 are calculated for the respective components, and are summed-up to derive the estimated value of the current supplied to the internal load 110).

In another aspect of calculating process of the current value, the controller 6 estimates the value of the current supplied to the internal load 110 based on the current value detected by the current detector 11, 21. The current value detected by the current detector 11, 21 is the current value (current value of the electric power generated in the power generation section 8) of the electric power supplied to both of the inverter 7 and the internal load 110, or the current value of the electric power supplied to the inverter 7 (value of the current output to the inverter 7). The value of the current supplied to the internal load 110 has a correlation with the value of the current of the electric power generated in power generation and the value of the current output to the inverter 7.

As described above, regarding the value of the current supplied to the internal load 110 and the value of the current of the electric power generated in power generation, the consumed electric power of the internal load 110 has a correlation in which the consumed electric power of the internal load 110 roughly increases/decreases monotonically with respect to the increase/decrease in the amount of electric power generated in the power generation section 8. The amount of electric power generated in the power generation section 8 is substantially proportional to the value of the current of the electric power generated in the power generation section 8. Therefore, by using this correlation, the value of the current supplied to the internal load 110 can be calculated based on the value of the current of the electric power generated in the power generation section 8. In this way, the estimated current value of the internal load 110 is derived based on the current value detected by the current detector 21.

As described above, the consumed electric power of the internal load 110 roughly increases/decreases monotonically with respect to the increase/decrease in the amount of electric power generated in the power generation section 8. The outline of this correlation will be described. The consumed electric power of the internal load 110 is roughly proportional to the amount of the electric power generated in the power generation section 8. The ratio between the value of the current supplied to the internal load 110 and the value of the current output to the inverter 7 is roughly constant. Therefore, by using this correlation, the value of the current supplied to the internal load 110 can be calculated based on the value of the current output to the inverter 7. In this way, the estimated current value of the internal load 110 is derived based on the current value detected by the current detector 11.

The estimated current value of the internal load 110 is used to finally attain one or both of the value of the current of the electric power generated in the power generation section 8 which is required to control the electric power generated in the power generation section 8 and the value of the current output to the inverter 7 which is required to adjust the electric power output from the inverter 7 to outside. However, the current value of the internal load 110 is smaller than the current value of the electric power generated in power generation and the value of the current output to the inverter 7. Because of this, even if there is an error in the above stated correlation, this affects a little the derived value of the current of the electric power generated in the power generation section 8 and the derived value of the current output to the inverter 7.

### <Power generation control>

The target electric power of the power generation section 8 is decided as desired. For example, in a case where the power generation section 8 generates constant electric power, the controller 6 decides the target electric power as a constant value. In another case where the fuel cell power generation system 1 is connected to the utility power supply 100 and load responsive control is performed, the controller 6 detects external load electric power supplied to the external load by using a power detector (not shown). The controller 6 sums up the detected external load electric power and internal load electric power supplied to the internal load 110. The controller 6 decides the target electric power based on the summed-up electric power. Note that the controller 6 decides the internal load electric power based on the estimated current value and voltage of the electric power supplied to the internal load 110.

The controller 6 performs feedback control so that the electric power generated in the power generation section 8 reaches the target electric power. In this feedback control, the current value detected by the current detector 11 or the current detector 21 and the estimated current value is used to detect the electric power generated in power generation which is a controlled amount. As the actuator to be controlled, the inverter 7 and the actuator of the internal load 110 including the fuel gas supply section 9 and the oxidizing gas supply section 10 are used. That is, the controller 6 detects the electric power generated in the power generation section 8 based on the current value detected by the current detector 11, 21, and the estimated current value, and controls the inverter 7 and the actuator of the internal load 110 including the fuel gas supply section 9 and the oxidizing gas supply section 10 so that the detected electric power generated in the power generation section 8 reaches the target electric power. In this control process, for example, the controller 6 adjusts the current taken out from the power generation section 8 and output to the outside, by using the inverter 7. For this adjustment, it is necessary to detect the current value of the inverter 7. Therefore, as described above, the current value of the inverter 7 is detected without fail. The controller 6 adjusts the supply amount of the hydrogen gas and the supply amount of the oxidizing gas with respect to the power generation section 8 so that they are adapted to the electric power generated in power generation, by using the actuator of the internal load 110. In this adjustment, the controller 6 outputs the operation amount to the actuator of the internal load 110 to control the actuator of the internal load 110.

### <Advantage>

In accordance with the above stated configuration, by using the current value detected by one current detector 11, 21, the value of the current of the electric power generated in the power generation section 8, the value of the current output to the inverter 7, and the value of the current supplied to the internal load 110 can be derived. Because of this, the number of components is less, the configuration for detecting the current which is required to control the electric power generated in power generation can be simplified, and cost of the fuel cell power generation system 1 can be reduced.

In addition, in the state in which the power generation section 8 is generating the electric power, the DC power is supplied from the power generation section 8 to the internal load 110 without being converted into the AC power. Therefore, since an electric power loss due to the conversion of the electric power is not generated, the fuel cell power generation system 1 having a high energy utilization efficiency can be implemented.

### (Embodiment 2)

### <Configuration>

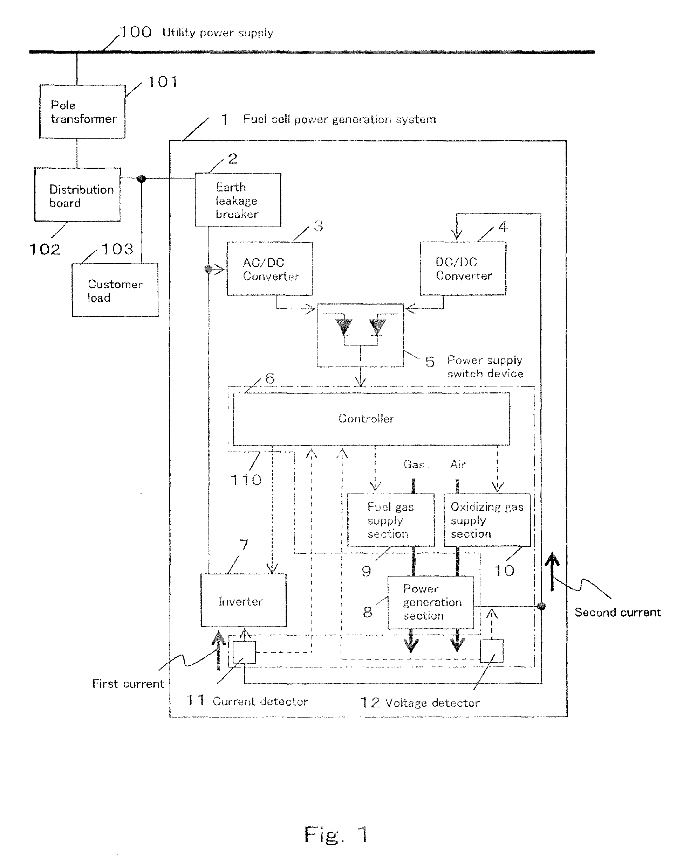

Fig. 1 is a functional block diagram showing the configuration of the fuel cell power generation system 1.

The fuel cell power generation system 1 is an example which is configured such that the fuel cell power generation system 1 of Embodiment 1 includes a power supply switch device 5.

The fuel cell power generation system 1 is connected to the utility power supply 100 via a pole transformer 101 and a distribution board 102. The distribution board 102 is installed in home. A customer load 103 is connected to a wire connecting the distribution board 102 to the fuel cell power generation system 1. The customer load 103 is an external load connected to the fuel cell power generation system 1. As the customer load 103, there are a television, a refrigerator, an air conditioning apparatus, etc., which are used in home and consume the electric power. Note that the external load is not limited to the customer load 103, but may be any object which consumes the electric power.

In the state in which the power generation section 8 of the fuel cell power generation system I is not generating electric power, the electric power is supplied from the utility power supply 100 to the customer load 103. On the other hand, in the state in which the power generation section 8 of the fuel cell power generation system 1 is generating the electric power, the electric power is supplied from the fuel cell power generation system 1 to the customer load 103. In this case, if the electric power from the fuel cell power generation system 1 is less than the electric power consumed in the customer load 103. makeup electric power is supplied from the utility power supply 100 to the customer load 103.

The fuel cell power generation system 1 includes the power generation section 8, the internal load 110, the inverter 7, the voltage detector 12, the current detector 11, and the controller 6. The fuel cell power generation system 1 may further include an earth leakage breaker 2, the AC/DC converter 3, and the power supply switch device 5.

The earth leakage breaker 2 cuts off supply of the electric power when a current is leaking in the fuel cell power generation system 1.

The AC/DC converter 3 converts the AC power from the utility power supply 100 into the DC power and supplies the DC power to the internal load 10, in the state in which the power generation section 8 is not generating electric power.

The DC/DC converter 4 supplies the DC power from the power generation section 8 to the internal load 110, in the state in which the power generation section 8 is generating electric power.

The power supply switch device 5 switches between the AC/DC converter 3 and the DC/DC converter 4, according to the power generation state of the power generation section 8. Thereby, a power supply source of the electric power supplied to the internal load 110 is switched between the utility power supply 100 and the power generation section 8.

The fuel gas supply section 9 supplies hydrogen which is the fuel gas to an anode of the power generation section 8. The fuel gas supply section 9 has a function of adjusting the supply amount of the gas, and is constituted by, for example, a plunger pump, a flow control valve, etc..

The oxidizing gas supply section 10 supplies the air which is the oxidizing gas to a cathode of the power generation section 8. The oxidizing gas supply section is constituted by an actuator such as a blower pump or a booster pump.

The power generation section 8 generates the electric power through electrode reaction between the hydrogen supplied from the fuel gas supply section 9 and the air supplied from the oxidizing gas supply section 10 and outputs the DC power. The DC power is used as electric power to drive the internal load 110 such as the controller 6, the fuel gas supply section 9, and the oxidizing gas supply section 10. Also, the DC power is converted into the AC power by the inverter 7 and supplied to the customer load 103.

During the power generation in the power generation section 8, the controller 6 adjusts the amount of the fuel supplied to the power generation section 8 and the amount of the air supplied to the power generation section 8. For example, the number of rotations of the pump of the oxidizing gas supply section 10 is increased or the opening degree of the flow control valve of the fuel gas supply section 9 is increased. Thus, the amount of the fuel supplied to the power generation section 8 and the amount of the air supplied to the power generation section 8 are increased, and the DC power is increased. On the other hand, the number of rotations of the pump of the oxidizing gas supply section 10 is decreased or the opening degree of the flow control valve of the fuel gas supply section 9 is decreased. Thus, the amount of the fuel supplied to the power generation section 8 and the amount of the air supplied to the power generation section 8 are decreased, and the DC power is decreased.

The inverter 7 receives the DC power from the power generation section 8, converts the DC power into the AC power and supplies the AC power to the customer load 103.

The current detector 11 detects the value of the current output to the inverter 7. The value of the output current is the value of the current of the electric power generated in the power generation section 8 and supplied to the inverter 7.

The voltage detector 12 detects the voltage of the electric power generated in the power generation section 8.

As the controller 6, for example, there are a microcontroller, a CPU, an MPU, a logic circuit, a PLC (Programmable Logic Controller), etc.. The controller 6 sets the target electric power to be generated in the power generation section 8. The controller 6 controls the inverter 7 and the internal load 110 so that the DC power generated in the power generation section 8 reaches the target electric power. For example, the controller 6 controls the inverter 7 to adjust the electric power taken out from the power generation section 8 and output to the outside, and controls the fuel gas supply section 9 and the oxidizing gas supply section 10 to adjust the amount of the fuel supplied to the power generation section 8 and the amount of the air supplied to the power generation section 8, thereby adjusting the DC power generated in the power generation section 8. Furthermore, the controller 6 calculates the estimated value of the current supplied to the internal load 110 based on the operation amount of the internal load 110.

### <Operation>

Next, the operation of the fuel cell power generation system 1 having the above configuration will be described.

When the power generation section 8 starts power generation, the AC power supplied from the utility power supply 100 is converted into the DC power by the AC/DC converter 3, and the DC power is supplied to the internal load. Thereby, the internal load such as the controller 6 and the supply sections 9, 10 are started-up, and the power generation section 8 starts power generation. The voltage detector 12 detects the voltage of the electric power generated in the power generation section 8.

When the voltage of the electric power generated in the power generation section 8 becomes a predetermined voltage or greater, the controller 6 controls the power supply switch device 5 to switch from the AC/DC converter 3 to the DC/DC converter 4. Thus, a part of the DC power from the power generation section 8 is supplied to the internal load via the DC/DC converter 4. Concurrently, a current (second current) flows from the power generation section 8 to the internal load. The remaining part of the DC power from the power generation section 8 is supplied to the customer load 103 via the inverter 7. Thereby, a current (first current) flows from the power generation section 8 to the inverter 7. The current detector 11 detects the value of the current output to the inverter 7. The controller 6 calculates the consumed electric power of the external load based on the value of the current output to the inverter 7 and the voltage of the electric power generated in power generation.

The controller 6 derives the estimated value of the current supplied to the internal load based on the operation amount of the internal load.

The operation amount, i.e., operating state or operation amount of the internal load are stored in a memory (not shown) which can be accessed properly by the controller 6. The operating state of the internal load is, for example, an ON/OFF signal output from the controller 6 to the fan. Based on the ON/OFF signal, it is determined whether or not the fan is operating. In a state in which the controller 6 is started-up, information indicating that the controller 6 is operating is stored. The operation amount of the internal load is, for example, the number of rotations of the pump of the oxidizing gas supply section 10 which is controlled by the controller 6 in an analog manner, the opening degree (or the number of rotations of the pump) of the flow control valve of the fuel gas supply section 9, etc..

The operation amount of each of components of the internal load 110 is pre-associated with the value of the current supplied in response to the control for the component of the internal load 110. The correlation between the operation amount and the value of the current is stored in a memory (not shown) which can be accessed properly by the controller 6. Each component of the internal load such as the fan or the controller 6 correlates with the value of the current supplied to operate the component of the internal load. Each number of rotations of the pump of the oxidizing gas supply section 10 correlates with the value of the current supplied to allow the pump to rotate at the number of rotations. Further, each opening degree of the control valve of the fuel gas supply section 9 correlates with the value of the current supplied to allow the control valve to be opened with the opening degree.

The controller 6 derives the estimated value of the current supplied to each of the components of the internal load 110, corresponding to the operation amount of the component of the internal load 110 based on the correlation between the operation amount and the current value. The controller 6 calculates the estimated value of the current supplied to the internal load by summing-up the estimated current values of the components. The controller 6 calculates the estimated consumed electric power of the internal load based on the estimated value of the current supplied to the internal load and the voltage of the generated electric power.

Based on the consumed electric power of the external load and the estimated consumed electric power of the internal load, which have been derived in the above described manner, the controller 6 sets the target electric power. The controller 6 controls the internal load based on the target electric power. To implement this control, the controller 6 derives present DC power in the power generation section 8 in the controlled fuel cell power generation system 1. That is, as in the above case, the controller 6 derives the value of the current output to the inverter 7, the estimated value of the current supplied to the internal load, and the voltage of the electric power generated in the power generation section 8, in the controlled fuel cell power generation system 1. The controller 6 calculates the value of the current of the electric power generated in the power generation section 8 by summing up these values. The controller 6 derives the DC power in the power generation section 8 based on the value of the current of the electric power generated in the power generation section 8 and the value of the voltage of the electric power generated in the power generation section 8.

The controller 6 compares the set target electric power to the present DC power in the power generation section 8. If the DC power in the power generation section 8 is more than the target electric power, as a result of the comparison, the controller 6 adjusts the electric power output to the outside by decreasing the value of the current to be taken out by the inverter 7. The controller 6 controls the supply sections 9, 10 to decrease the amount of the fuel supplied to the power generation section 8 and the amount of the air supplied to the power generation section 8. As a result, the DC power generated in the power generation section 8 is decreased. On the other hand, if the DC power in the power generation section 8 is less than the target electric power, the controller 6 adjusts the electric power output to the outside by increasing the value of the current to be taken out by the inverter 7. The controller 6 controls the supply sections 9, 10 to increase the amount of the fuel supplied to the power generation section 8 and the amount of the air supplied to the power generation section 8. As a result, the DC power generated in the power generation section 8 is increased. In this way, the controller 6 controls the internal load 110 so that the DC power in the power generation section 8 reaches the target electric power. Then, the controller 6 sets new target electric power, compares the set target electric power to the DC power generated in the power generation section 8 in the fuel cell power generation system 1 controlled based on the set target electric power, and further controls the internal load. In this way, the controller 6 repeats the feedback control.

In accordance with the fuel cell power generation system 1 having the above configuration, the estimated value of the current supplied to the internal load 110 is derived based on the operation amount of the internal load. Because of this, by merely providing the current detector 11 for detecting the value of the current supplied to the inverter 7, the value of the current of the electric power generated in the power generation section 8 is derived. Since there is no need for a plurality of current detectors to detect the respective current values as described above, the configuration of the current detecting system can be simplified and cost of the fuel cell power generation system 1 can be reduced.

The DC power generated in the power generation section 8 is supplied to the internal load 110 without being converted into the AC power. Therefore, since an electric power loss due to the conversion of the electric power is not generated, the fuel cell power generation system 1 can achieve a high energy utilization efficiency.

Based on the current value detected by the current detector 11 or the operation amount of the internal load 110, the estimated value of the current supplied to the internal load 110 is calculated more accurately. Based on this, the target electric power and the DC power in the power generation section 8 become more accurate. As a result, the fuel cell power generation system 1 is able to generate the electric power stably.

### (Embodiment 3)

The fuel cell power generation system 1 of Embodiment 3 is configured in such a manner that the fuel cell power generation system 1 of Embodiment 2 includes an operation amount detecting section 13.

Hereinafter, regarding the configuration and operation of Embodiment 3, differences from those of Embodiment 2 will be described in a greater part.

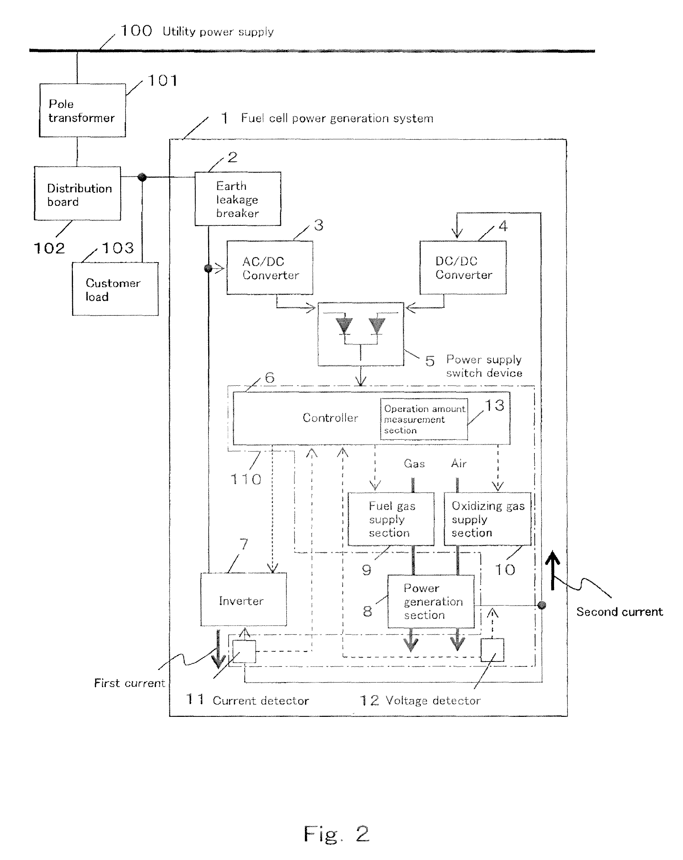

Fig. 2 is a functional block diagram showing the configuration of the fuel cell power generation system 1.

The operation amount detecting section 13 is included in the controller 6. The operation amount detecting section 13 detects the operation amount of the fuel cell power generation system 1. The operation amount is, for example, the number of times the fuel cell power generation system 1 is started-up, an accumulated current application time of the fuel cell power generation system 1, the number of times the power generation section 8 generates the electric power, and a time for which the power generation section 8 generates the electric power. The operation amount is accumulated based on information associated with control performed by the controller 6 and stored in a memory which can be accessed by the controller 6.

The controller 6 corrects the estimated value of the current supplied to the internal load, based on the operation amount of the fuel cell power generation system 1 which is detected by the operation amount detecting section 13. For example, a coefficient corresponding to the operation amount is predetermined and stored in a memory which can be accessed by the controller 6. Some of the components of the internal load 110 changes with a passage of time, with an increase in the operation amount. For example, a coil resistance might increase, the sliding capability of the actuator might be degraded, or a built-in filter might be clogged. In this case, to maintain the performance of the internal load 110, the estimated value of the current supplied to the internal load 110 is required to be set greater. In view of this, the coefficient corresponding to the operation amount is determined to be greater as the operation amount increases.

The controller 6 corrects the estimated value of the current supplied to the internal load 110, by multiplying the estimated value of the current supplied to the internal load 110 as derived above, by the coefficient corresponding to the operation amount.

In accordance with the fuel cell power generation system 1 having the above configuration, the estimated value of the current supplied to the internal load is derived more accurately. Therefore, the target electric power and the DC power in the power generation section 8, which are derived from the estimated value of the current supplied to the internal load 110, become more accurate. As a result, the fuel cell power generation system 1 can be controlled stably.

### (Embodiment 4)

The fuel cell power generation system 1 of Embodiment 4 is configured in such a manner that the fuel cell power generation system I of Embodiment 2 includes an obtaining section 20.

Hereinafter, regarding the configuration and operation of Embodiment 4, differences from those of Embodiment 2 will be described in a greater part.

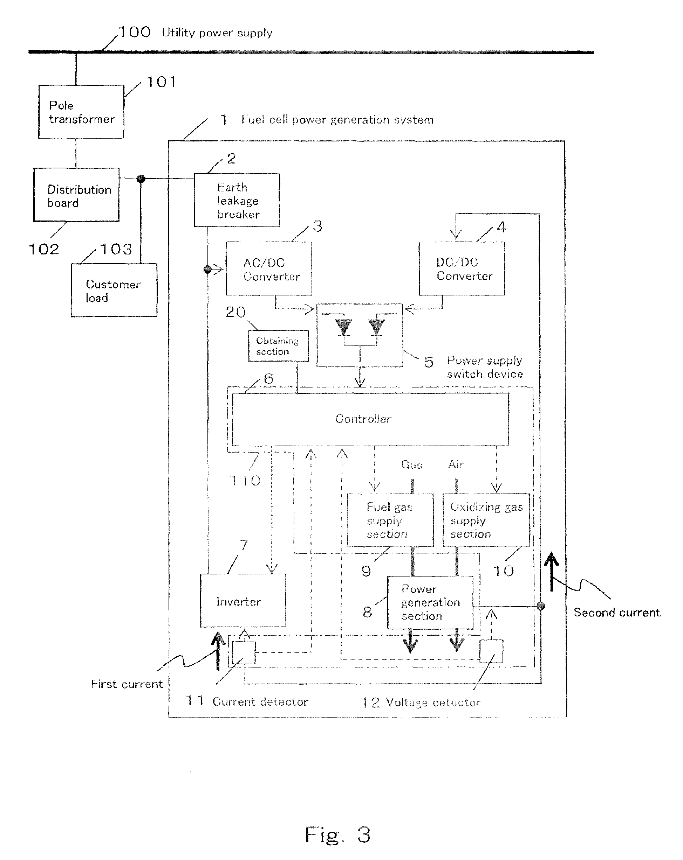

Fig. 3 is a functional block diagram showing the configuration of the fuel cell power generation system 1.

The obtaining section 20 obtains installation information about installation of the fuel cell power generation system 1. The obtaining section 20 is connected to the controller 6, and outputs the obtained installation information to the controller 6. The installation information is obtained by an input operation of a user, an installation operator, a maintenance operator, etc., an input from a communication means such as Internet, an input from a sensor such as a height indicator, an air gauge, etc..

The installation information includes, for example, the location and height at which the fuel cell power generation system 1 is installed, the length of a duct in a case where the fuel cell power generation system 1 is installed in a basement, etc.. The installation location of the fuel cell power generation system 1 includes, for example, a country, an address, a postal code, a latitude, a longitude, etc., at which the fuel cell power generation system 1 is installed.

The installation information correlates with correction information such as the coefficient and is stored in a memory (not shown).

For example, in Europe such as Germany, the fuel cell power generation system 1 is sometimes installed in a basement. In this case, the duct coupled to the fuel cell power generation system 1 becomes long, and great electric power is supplied to a ventilation fan. In view of this, in the installation information for Germany, the correction information is set so that the estimated value of the current supplied to the ventilation fan is greater.

In a case where a height sensor is attached on the fuel cell power generation system 1, the height correlates with the correction information as the installation information. As the height increases, the concentration of oxygen in the air decreases. Because of this, it is necessary to increase the amount of the air supplied from the oxidizing gas supply section 10 to the power generation section 8. Therefore, the operation amount of the oxidizing gas supply section 10 increases and the electric power supplied to the oxidizing gas supply section 10 increases. Thus, the correction information is set so that the estimated value of the current supplied to the oxidizing gas supply section 10 is greater as the height increases.

On the other hand, as the height increases, the air pressure decreases. Therefore, as the height increases, the electric power for rotating the ventilation fan is less, and the electric power supplied to the ventilation fan is less. Thus, the correction information is set so that the estimated value of the current supplied to the ventilation fan is less as the height increases.

The controller 6 derives the correction information of the above correlation based on the installation information obtained by the obtaining section 20. The controller 6 corrects the estimated value of the current supplied to the internal load 110 based on this correction information.

In accordance with the fuel cell power generation system 1 having the above configuration, the estimated value of the current supplied to the internal load 110 is derived more accurately. Therefore, the target electric power and the DC power in the power generation section 8, which are derived from the estimated value of the current supplied to the internal load 110, become more accurate. As a result, the fuel cell power generation system 1 can be controlled stably.

### (Other embodiment)

In the fuel cell power generation systems 1 of Embodiment 2 to Embodiment 4, the current detector 11 for detecting the value of the current (first current) supplied to the inverter 7 is provided. By comparison, the fuel cell power generation system 1 may include the current detector 21 for detecting the value of the current (third current) of the electric power generated in the power generation section 8.

Fig. 4 is a functional block diagram showing the configuration of the fuel cell power generation system 1. Like the fuel cell power generation system 1 of Embodiment 3, the operation amount detecting section 13 may be included in the controller 6. Like the fuel cell power generation system 1 of Embodiment 4, the obtaining section 20 may be connected to the controller 6.

The current detector 21 detects the value of the current of the electric power generated in the power generation section 8 and outputs the current value to the controller 6. The value of the current of the electric power generated in the power generation section 8 is the value of the electric power generated in the power generation section 8 and supplied to both of the inverter 7 and the internal load 110.

In this case, the controller 6 calculates the DC power in the power generation section 8 by multiplying the value of the current of the electric power generated in the power generation section 8 which is received from the current detector 21 by the voltage of the generated electric power which is received from the voltage detector 12. In addition, the controller 6 derives estimated current value corresponding to the internal load operation amount based on the operation amount of the internal load 110. The controller 6 calculates estimated consumed electric power of the internal load by multiplying the estimated value of the current supplied to the internal load by the voltage of the generated electric power. Furthermore, the controller 6 derives the value of the current supplied to the inverter 7 by subtracting the estimated value of the current supplied to the internal load from the value of the current of the electric power generated in the power generation section 8. The controller 6 calculates the consumed electric power of the external load by multiplying the value of the current supplied to the inverter 7 by the voltage of the generated electric power.

The controller 6 sets the target electric power based on the consumed electric power of the external load and the estimated consumed electric power of the internal load 110 which have been derived above. The controller 6 controls the internal load based on the target electric power. The controller 6 obtains the present value of the current of the electric power generated in the power generation section 8 in the controlled fuel cell power generation system 1, from the current detector 21. The controller 6 derives the DC power in the power generation section 8 based on the value of the current of generated electric power and the voltage of the electric power generated in the power generation section 8 in the controlled fuel cell power generation system 1.

The controller 6 compares the set target electric power to present DC power generated in the power generation section 8. Based on a result of the comparison, the controller 6 repeats the feedback control.

In accordance with the fuel cell power generation system 1 having the above configuration, the same advantages as those of Embodiment 2 are achieved. If the operation amount detecting section 13 and the obtaining section 20 are incorporated into the fuel cell power generation system 1, the same advantages as those of Embodiment 3 and Embodiment 4 are achieved.

### (Other Embodiment)

In the fuel cell power generation systems 1 of Embodiment 2 to Embodiment 4, the estimated value of the current supplied to the internal load 110 is derived based on the operation amount of the internal load 110. In contrast, the estimated value of the current supplied to the internal load 110 may be derived based on the current value detected by the current detector 11, 21.

In this case, the current value detected by the current detector 11, 21 is the value of the current supplied to the inverter 7 or the value of the current of the electric power generated in the power generation section 8. A predetermined ratio is set between the current value detected by the current detector 11, 21 and the estimated value of the current supplied to the internal load. This ratio may be set to change according to the value of the current of the electric power generated in the power generation section 8 and the value of the current supplied to the inverter 7.

The estimated current value based on the current value detected by the current detector 11, 21 is sometimes lower in accuracy than the estimated current value based on the operation amount of the internal load 110. However, the value of the current supplied to the internal load 110 is smaller than the value of the current of the electric power generated in the power generation section 8 and the value of the current supplied to the inverter 7. Therefore, even when the estimated value of the current supplied to the internal load 110 contains an error, its influence is less. Therefore, the same advantages as those of Embodiment 2 are achieved. If the operation amount detecting section 13 and the obtaining section 20 are incorporated into the fuel cell power generation system 1, the same advantages as those of Embodiment 3 and Embodiment 4 are achieved.

The above embodiments may be combined so long as they are not eliminated by the combination.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

### Industrial Applicability

A fuel cell power generation system of the present invention is useful as a fuel cell power generation system capable of increasing an energy utilization efficiency and simplifying the configuration for detecting a current required to control electric power generated in power generation, a control method thereof, or the like.

### Reference Signs Lists

- 1: fuel cell power generation system
- 6: controller
- 7: inverter
- 8: power generation section
- 11: current detector
- 12: voltage detector
- 13: operation amount detecting section
- 20: obtaining section
- 21: current detector
- 110: internal load

## Claims

1. A fuel cell power generation system comprising:
a power generation section which causes fuel gas and oxidizing gas to electrochemically react with each other to generate electric power;
an internal load which consumes the electric power and causes the power generation section to perform power generation operation;
an inverter which converts input DC power into AC power, outputs the AC power to outside, and adjusts the AC power output to outside;
a voltage detector for detecting a voltage of the electric power generated in the power generation section;
a current detector for detecting a value of a current of the electric power generated in the power generation section and supplied to both of the inverter and the internal load, or to the inverter; and
a controller which decides target electric power generated in the power generation section and controls the inverter and the internal load;
wherein the controller is configured to estimate the value of the current supplied to the internal load based on at least one of the current value detected by the current detector and an operation amount of the internal load, and control the inverter and the internal load based on the current value detected by the current detector and the estimated current value so that the electric power generated in the power generation section reaches the target electric power.

2. The fuel cell power generation system according to Claim 1, further comprising:
an operation amount detecting section for detecting an operation amount of the fuel cell power generation system;
wherein the controller is configured to correct the estimated current value based on the operation amount detected by the operation amount detecting section.

3. The fuel cell power generation system according to Claim 1 or 2, further comprising:
an obtaining section for obtaining installation information about installation of the fuel cell power generation system;
wherein the controller is configured to correct the estimated current value based on the installation information obtained by the obtaining section.

4. The fuel cell power generation system according to Claim 3,
wherein the internal load includes an air supply device for supplying air to the power generation section as the oxidizing gas;
the installation information includes a height at which the fuel cell power generation system is installed; and
the controller is configured to correct the estimated current value based on the height of the installation information.

5. A method of controlling a fuel cell power generation system including: a power generation section which causes fuel gas and oxidizing gas to electrochemically react with each other to generate electric power; an internal load which consumes the electric power and causes the power generation section to perform power generation operation; an inverter which converts input DC power into AC power, outputs the AC power to outside, and adjusts the AC power output to outside; a voltage detector for detecting a voltage of the electric power generated in the power generation section; a current detector for detecting a value of a current of the electric power generated in the power generation section and supplied to both of the inverter and the internal load, or to the inverter; and a controller which decides target electric power generated in the power generation section and controls the inverter and the internal load;
wherein the controller estimates a value of a current supplied to the internal load based on at least one of the current value detected by the current detector and an operation amount of the internal load, and controls the inverter and the internal load based on the current value detected by the current detector and the estimated current value so that the electric power generated in the power generation section reaches the target electric power.
